# EUROPÄISCHE PATENTSCHRIFT

(11) **EP 1 891 341 B1**
(45) Veröffentlichungstag und Bekanntmachung des Hinweises auf die Patenterteilung: **14.07.2010**
(21) Anmeldenummer: 06743091.8
(22) Anmeldetag: 31.05.2006
(51) Int. Cl.: F16B 35/04, B21K 1/56, B21H 3/02

(54) **Mit einer Längsbohrung versehener Hohlbolzen und dessen Herstellungsverfahren**
Hollow bolt comprising a longitudinal bore and manufacturing method thereof
Boulon creux pourvu d'un alésage longitudinal et sa méthode de fabrication

(30) Priorität: 10.06.2005 DE 102005026883
(43) Veröffentlichungstag der Anmeldung: 27.02.2008
(73) Patentinhaber: EJOT GmbH & Co. KG, 57334 Bad Laasphe (DE)
(72) Erfinder: CHRIST, Eberhard, 99897 Tambach-Dietharz (DE)
(74) Vertreter: Bardehle, Heinz
(86) Internationale Anmeldenummer: PCT/EP2006/005186
(87) Internationale Veröffentlichungsnummer: WO 2006/131248

(56) Entgegenhaltungen:
- DE-A1- 1 921 229
- US-A- 5 961 267
- PATENT ABSTRACTS OF JAPAN Bd. 014, Nr. 135 (M-0949), 14. März 1990 (1990-03-14) -& JP 02 006029 A (SUMITOMO METAL IND LTD), 10. Januar 1990 (1990-01-10)

## Beschreibung

Die Erfindung bezieht sich auf ein Verfahren zur Herstellung eines Hohlbolzens, der mit umlaufenden Einkerbungen versehen ist, und auf einen danach gestalteten Hohlbolzen.

Bei dem mit umlaufenden Einkerbungen versehenen Holbolzen kann es sich um einen Schraubenbolzen oder um einen Bolzen mit ringförmigen Einkerbungen handeln, wie diese beispielsweise zum Aufrasten von irgendwelchen mit einer passenden Bohrung versehenen Kunststoffbauteilen Verwendung finden.

Mit einer Längsbohrung versehene Bolzen, sog. Hohlbolzen, werden häufig in Verschraubungen verwendet, die eine nachträgliche Justierung eines von dem Bolzen gehaltenen Bauteils erfordern, wozu z.B. mit einem Schraubenzieher, der durch die Längsbohrung in dem Hohlbolzen geführt wird, irgendeine Einstellverschraubung betätigt wird. Die Herstellung solcher mit umlaufenden Einkerbungen versehener Hohlbolzen ist dann schwierig, wenn die umlaufenden Einkerbungen, also insbesondere ein Gewinde, auf den Hohlbolzen aufgewalzt werden sollen. In diesem Falle neigt wegen der dabei auftretenden erheblichen Drücke der Hohlbolzen zur radialen Deformation, da in seinem Inneren wegen der Längsbohrung das notwendige Material für die Aufnahme der erheblichen Drücke fehlt. Aus diesem Grunde werden Hohlbolzen mit aufgewalztem Gewinde in der Weise hergestellt, dass zunächst auf einem massiven Rohling das Gewinde aufgewalzt und danach der Bolzen durch Bohren mit der Längsbohrung versehen wird. Es handelt sich dabei um einen zusätzlichen Arbeitsgang, der die Herstellung derartiger Hohlbolzen wesentlich verteuert.

In der DE 1 921 229 A1 ist eine vibrationsfeste Schraube beschrieben und dargestellt, bei der ein aus drei symmetrisch, dicht nebeneinander angeordneten Rundstäben gebildeter Rohling zu einer zopfförmigen Gestalt verwunden wird, wobei sich die drei Rundstäbe gewindeartig aneinander anschmiegen, woraufhin auf dieses Gebilde ein Schraubengewinde aufgepresst wird, das dann innere Federungseigenschaften aufweist, die sich in einem Muttergewinde, in das eine derartige Schraube eingeschraubt ist, gewissermaßen verkrallen und die Schraube vibrationsfest machen. Eine durchgehende gerade Bohrung zum Hindurchführen irgendeines Werkzeuges ist bei dieser Schraube nicht vorhanden.

Der Erfindung liegt die Aufgabe zugrunde, einen mit einer Längsbohrung versehenen Hohlbolzen zu schaffen, bei dem ohne die Gefahr einer Deformation des mit der Längsbohrung versehenen Rohlings umlaufende Einkerbungen durch Walzen auf den Rohling aufgebracht werden können. Erfindungsgemäß geschieht dies dadurch, dass ein Bolzenrohling mit einer von einer ringförmigen Wandung umgebenen Längsbohrung mit Längsnuten zwischen den Bolzendurchmesser bestimmenden Erhebungen versehen wird und auf den mit den Längsnuten und den Erhebungen versehenen Hohlbolzen die umlaufenden Einkerbungen aufgewalzt werden, wobei die Längsnuten einen solchen Querschnitt besitzen, dass ein Teil des beim Aufwalzen der Einkerbungen verdrängten Materials ohne Deformation der ringförmigen Wandung in die Längsnuten fließt.

Aufgrund der Längsnuten, die sich entlang des zunächst noch von den Einkerbungen freien Hohlbolzen erstrecken, ergeben sich beim Walzen der Einkerbungen Drücke auf das dabei verformte Material des Hohlbolzens, das in durch die Längsnuten gebildete Freiräume ausweichen kann, wodurch sich der auf das Material des Hohlbolzens wirkende, von Walzwerkzeugen ausgeübte Druck entsprechend vermindert. Diese Druckverminderung ist so groß, dass sich der Hohlbolzen trotz seiner Längsbohrung bei diesem Vorgang nicht verformt. Dabei wird das beim Walzen der Einkerbungen ausweichende Material in die Bereiche der Längsnuten verschoben, so dass sich praktisch Gewindegänge bzw. Ringe ohne eine längere Unterbrechung durch die Längsnuten ergeben. Dabei ist eine kurze Lücke der Gewindegänge meist sogar wünschenswert, insbesondere, wenn es sich um ein selbstfurchendes Gewinde handelt, da sich aufgrund der Lücken in dem gewalzten Gewinde Kanten ergeben, die das Einfurchen des Muttergewindes erleichtern. Das Material des Muttergewindes kann dann auch noch in diese Lücken einfließen, womit das Lösmoment einer derartigen Schraube zusätzlich erhöht wird.

Das Aufwalzen eines Gewindes auf einen Bolzen, dem vor dem Aufwalzen des Gewindes mit großer Steigung verlaufende Schraubennuten aufgewalzt worden waren, ist an sich aus der US-PS 2,562,516 bekannt. Die Schraubennuten, die das nachträglich aufgewalzte Gewinde an vielen Stellen unterbrechen, sollen dazu dienen, im Gewinde Schneidzähne zu erzeugen, die das Einfurchen eines Muttergewindes durch den Bolzen erleichtern sollen. Der Bolzen selbst ist massiv ausgebildet, d.h. er besitzt keine Längsbohrung. Es ist daher in der Patentschrift auch nichts dahingehend offenbart, wie die besonderen Verhältnisse eines mit einer Längsbohrung versehenen Hohlbolzens berücksichtigt werden können.

Die Erfindung bezieht sich auch auf einen Hohlbolzen mit umlaufenden Einkerbungen, der eine von einer ringförmigen Wandung umgebene Längsbohrung aufweist und sich aus einem Rohling ergibt, der mit Längsnuten versehen ist, die zwischen den Bolzendurchmesser bestimmenden Erhebungen verlaufen, und auf den mit den Längsnuten und den Erhebungen versehenen Hohlbolzen die umlaufenden Einkerbungen aufgewalzt sind, wobei die Längsnuten einen solchen Querschnitt besitzen, dass ein Teil des beim Aufwalzen der Einkerbungen verdrängten Materials in die Längsnuten geflossen ist.

Bei den Einkerbungen kann es sich in erster Linie um ein Gewinde handeln und es ist aber auch möglich, die Einkerbungen so zu gestalten, dass diese Ringe bilden. Auch hierfür gibt es bekannte Anwendungsfälle.

Für die Gestaltung der Längsnuten gibt es verschiedene Möglichkeiten. Man kann die Längsnuten so legen, dass sie parallel zur Achse die Hohlbolzen verlaufen. Es ist aber auch möglich, die Längsnuten in einem Schrägungswinkel zur Achse des Hohlbolzens zu legen. In jedem Falle kreuzen die Längsnuten die aufgewalzten Einkerbungen, unabhängig davon, ob diese ein Gewinde oder Ringe bilden.

In den Figuren sind Ausführungsbeispiele der Erfindung dargestellt. Es zeigen:
- Figur 1: einen Hohlbolzen mit schräg verlaufenden Längsnuten, ohne umlaufende Einkerbungen;
- Figur 2: einen ähnlichen Hohlbolzen mit parallel zu seiner Achse verlau- fenden Längsnuten;
- Figur 3: einen Hohlbolzen gemäß Figur 1 mit aufgewalztem Gewinde;
- Figur 4: einen Holzbolzen gemäß Figur 2 mit aufgewalzten Ringen.

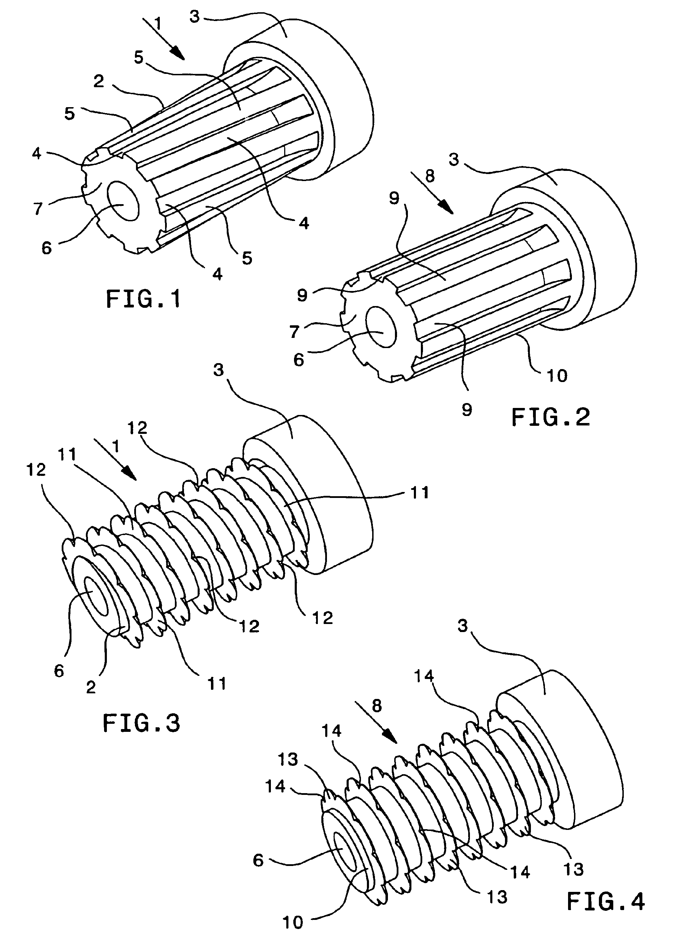

In der Figur 1 ist der Hohlbolzen 1 mit seinem Schaft 2 und seinem Kopf 3 dargestellt. Auf den Schaft 2 sind die Längsnuten 4 aufgebracht, die zwischen den Erhebungen 5 liegen. Die Erhebungen bestimmen mit ihrer Außenfläche den Durchmesser des Bolzenschaftes 2. Der Hohlbolzen 1 wird über seine gesamte Länge von der Längsbohrung 6 durchsetzt, die eine entsprechende ringförmige Wandung 7 umgibt.

Die Längsnuten 4 können auf beliebige Weise auf den Schaft 2 aufgebracht sein, z.B. durch Walzen oder Pressen. Der so hergestellte Hohlbolzen wird dann im Zuge eines weiteren Herstellungsverfahrens, auf das weiter unten näher eingegangen wird, mit Einkerbungen versehen, wie dies im Zusammenhang mit den Figuren 3 und 4 dargestellt ist.

In der Figur 2 ist eine ähnliche Gestaltung eines Hohlbolzens 8 dargestellt, der sich von dem Hohlbolzen 1 gemäß Figur 1 dadurch unterscheidet, dass die Längsnuten 9 achsparallel zum Schaft 10 des Hohlbolzens 8 verlaufen.

Die Hohlbolzen gemäß den Figuren 1 und 2 bilden eine Art Rohling für das weitere Herstellungsverfahren des erfindungsgemäßen Hohlbolzens, der in seiner endgültigen Gestaltung in den Figuren 3 und 4 wiedergegeben ist.

Der in der Figur 3 dargestellte Hohlbolzen 1 ist durch Aufwalzen eines Gewindes auf den Hohlbolzen 1 gemäß Figur 1 entstanden, wozu auf den Hohlbolzen 1 gemäß Figur 1 ein Gewinde aufgewalzt worden ist, das die Gewindegänge 11 geformt hat. BeimWalzen dieser Gewindegänge werden aus dem Material des Hohlbolzens 1 die einzelnen Gewindegänge 11 ausgeformt, die sich um den Schaft 2 des Hohlbolzens 1 herum winden und kurze Lücken 12 aufweisen, die von den Längsnuten 4 herrühren. Dabei ergibt sich aufgrund des Materialflusses, dass die Längsnuten 4 zu den gegenüber in der Breite verkürzten Lücken 12 zusammenschrumpfen, was darauf zurückzuführen ist, dass bei dem Walzen des Gewindes mit den Gewindegängen 11 das Bolzenmaterial in die Längsnuten 4 einfließt und damit die gegenüber der Breite der Längsnuten 4 verkürzten Lücken 12 frei lässt. Je breiter die Längsnuten sind, desto längere Lücken bilden sich aus. Bei besonders schmalen Längsnuten schrumpfen die Lücken so weit zusammen, dass sie sich praktisch ganz schließen. Aufgrund dieses so ermöglichten Materialflusses ergibt sich die oben erwähnte Verminderung des Druckes der Walzwerkzeuge auf den Hohlbolzen 1, was dazu führt, dass sich die ringartige Umfassung der Bohrung 6 gemäß der Oberfläche 7 nicht deformiert.

Der mit gewalzten Einkerbungen versehene Hohlbolzen 8 gemäß Figur 4 geht auf den in der Figur 2 dargestellten Hohlbolzen zurück, der mit achsparallelen Längsnuten 9 versehen ist. Diese Längsnuten haben beim Walzen der in der Figur 4 dargestellten ringförmigen Einkerbungen zu ringförmigen Erhebungen 13 geführt, die durch die Lücken 14 unterbrochen sind (ähnlich den Lücken 12 gemäß Figur 3). Bezüglich der Entstehung der Lücken 13 und ihrer Auswirkung sei auf die vorstehende Erläuterung zu Figur 3 verwiesen.

Es sei noch darauf hingewiesen, dass selbstverständlich die ringförmigen Erhebungen 13 auch bei einer Gestaltung eines Hohlbolzens 1 gemäß Figur 1 möglich ist, also bei einem Hohlbolzen mit schräg verlaufenden Einkerbungen 4.

## Patentansprüche

1. Verfahren zur Herstellung eines Hohlbolzens (1), der mit umlaufenden Einkerbungen versehen ist, **dadurch gekennzeichnet, dass** ein Bolzenrohling mit einer von einer ringförmigen Wandung (7) umgebenen Längsbohrung (6) mit Längsnuten (4) zwischen den Bolzendurchmesser bestimmenden Erhebungen (5) versehen wird und auf den mit den Längsnuten (4) und den Erhebungen (5) versehenen Hohlbolzen (1) die umlaufenden Einkerbungen aufgewalzt werden, wobei die Längsnuten (4) einen solchen Querschnitt besitzen, dass ein Teil des beim Aufwalzen der Einkerbungen verdrängten Materials ohne Deformation der ringförmigen Wandung (7) in die Längsnuten (4) fließt.

2. Hohlbolzen mit umlaufenden Einkerbungen, hergestellt nach dem Verfahren gemäß Anspruch 1, **dadurch gekennzeichnet, dass** der Hohlbolzen (1) eine von einer ringförmigen Wandung (7) umgebene Längsbohrung (6) aufweist und sich aus einem Rohling ergibt, der mit Längsnuten (4) versehen ist, die zwischen den Bolzendurchmesser bestimmenden Erhebungen (5) verlaufen, auf die die umlaufenden Einkerbungen aufgewalzt sind, wobei die Längsnuten (4) einen solchen Querschnitt besitzen, dass ein Teil des beim Aufwalzen der Einkerbungen verdrängten Materials in die Längsnuten (4) geflossen ist.

3. Hohlbolzen nach Anspruch 2, **dadurch gekennzeichnet, dass** die Einkerbungen ein Gewinde bilden.

4. Hohlbolzen nach Anspruch 2, **dadurch gekennzeichnet, dass** die Einkerbungen Ringe bilden.

5. Hohlbolzen nach einem der Ansprüche 2 bis 4, **dadurch gekennzeichnet, dass** die Längsnuten parallel zur Achse des Hohlbolzens verlaufen.

6. Hohlbolzen nach einem der Ansprüche 2 bis 4, **dadurch gekennzeichnet, dass** die Längsnuten in einem Schrägungswinkel zur Achse des Hohlbolzens verlaufen.

## Claims

1. Process for producing a hollow bolt (1) being provided with circumferential notches **characterized in that** a bolt blank which having a longitudinal bore (6) surrounded by a corresponding annular wall (7) is provided with longitudinal grooves (4) extending between elevations (5) determining the bolt diameter, and onto which hollow bolt (1) provided with the longitudinal grooves (4) and the elevations (5), the circumferential grooves are rolled, wherein the longitudinal grooves (4) being of such cross-section that some of the material displaced during rolling-on of the notch flows into the longitudinal grooves (4) without deforming the annular wall (7).

2. Hollow bolt (1) having circumferential notches, produced by the process according to claim 1, **characterized in that** the hollow bolt (1) is provided with a longitudinal bore (6) surrounded by an annular wall (7) and is resulting from a bolt blank which is provided with longitudinal grooves (4) extending between elevations (5) determining the bolt diameter, onto which elevations circumferential notches are rolled wherein the longitudinal grooves (4) have such a cross-section that same of the material displaced during rolling-on of the notches has flown into the longitudinal grooves (4).

3. Hollow bolt (1) according to claim 2, **characterized in that** the notches form a thread.

4. Hollow bolt (1) according to claim 2, **characterized in that** the notches form rings.

5. Hollow bolt (1) according to one of the claims 2 to 4, **characterized in that** the longitudinal grooves extend parallel to the axis of the hollow bolt (1).

6. Hollow bolt (1) according to claim 2, **characterized in that** the longitudinal grooves extend at an inclined angle to the axis of the hollow bolt (1).

## Revendications

1. Procédé de fabrication d'un boulon creux (1) qui est pourvu de dentelures périphériques **caractérisé en ce qu'**une ébauche de boulon est pourvue d'un alésage longitudinal (6) entourée par une paroi annulaire (7) de rainures longitudinales (4) entre les éminences (5) qui déterminent le diamètre de boulon et sur lequel les dentelures périphériques sont laminées avec les rainures longitudinales (4) et les boulons pourvus d'éminences, les rainures longitudinales (4) possédant une telle coupe transversale, qu'une partie du matériel refoulé lors du laminage des dentelures s'écoule dans les rainures longitudinales sans déformation de la paroi annulaire (7).

2. Boulon creux avec dentelures périphériques, fabriqué selon le procédé conformément à revendication 1, **caractérisé en ce que** le boulon creux (1) présente un alésage longitudinal (6) entouré d'un paroi annulaire (7) et qui résulte d'une ébauche, qui est pourvue de rainures longitudinales (4) qui s'étendent entre les éminences (5) qui déterminent le diamètre du boulon, sur lesquelles les dentelures périphériques sont laminées, les rainures longitudinales (4) possédant une telle coupe transversale qu'une partie du matériel refoulé lors du laminage des dentelures est écoulée dans les rainures longitudinales.

3. Boulon creux selon revendication 2, **caractérisé en ce que** les dentelures forment un filetage.

4. Boulon creux selon revendication 2, **caractérisé en ce que** les dentelures forment des anneaux.

5. Boulon creux selon revendications 2 à 4, **caractérisé en ce que** les rainures longitudinales s'étendent parallèlement à l'axe du boulon creux.

6. Boulon creux selon l'une des revendications 2 à 4, **caractérisé en ce que** les rainures longitudinales s'étendent dans un angle d'obliquité par rapport à l'axe du boulon creux.
